# EUROPEAN PATENT APPLICATION

(11) **EP 3 982 612 A2**
(43) Date of publication of application: **13.04.2022**
(21) Application number: 21201651.3
(22) Date of filing: 08.10.2021
(51) Int. Cl.: H04L 45/24

(54) **DYNAMIC FAST LINK AGGREGATION CONTROL PROTOCOL**

(30) Priority: 09.10.2020 US 202063089559 P
(71) Applicant: ARRIS Enterprises LLC, Suwanee, GA 30024 (US)
(72) Inventor: HU, Maocheng, San Jose, CA 95112 (US)
(74) Representative: Openshaw & Co.

(57) **Abstract**

A computer network device (such as a switch or a router) that implements a trunk is described. During operation, the computer network device may receive a link aggregation group (LAG) command. In response, the computer network device may access a user LAG configuration and information specifying events for ports. Moreover, the computer network device may receive packet data units (PDUs) associated with the ports. Then, the computer network device may determine a dynamic LAG based at least in part on the user LAG configuration, the information and the PDUs. Next, the computer network device may implement the trunk having member ports in a physical layer based at least in part on the dynamic LAG, where the member ports in the trunk include at least a subset of member ports in the dynamic LAG.

## Description

### FIELD

The described embodiments relate to techniques for implementing a dynamic fast link aggregation control protocol (dFLACP) for aggregating links associated with computer network devices (such as network switches).

### BACKGROUND

Link aggregation allows multiple physical Ethernet links to be bundled to form a single logical trunk (or trunk group) that provides enhanced performance and redundancy. The aggregated trunk may be viewed as a single logical link by connected computer network devices (such as switches or routers), a spanning tree protocol (STP), virtual local area network (VLANs), and so on. Note that the aggregated trunk (which includes a subset of ports that provide forwarding function) is sometimes referred to as a 'link aggregation group' (LAG). However, in the discussion that follows, a LAG refers to a user configuration or user configured object. Instead, in the discussion that follows the aggregated trunk is sometimes referred to as a 'trunk group.' For a given LAG, there may be one trunk that is created. Multiple ports from the same LAG can be aggregated together to become the same trunk group member.

Link aggregation control protocol (LACP), as standardized in Institute of Electrical and Electronics Engineers (IEEE) 802.3ad, provides guidance on link aggregation of data links or connections. Notably, LACP can be used to negotiate settings between two or more connected computer network devices to establish a dynamic LAG. In contrast with a static LAG (which may be set up without signaling between the two or more connected computer network devices, and which only has port-link event-based control that cannot detect cabling or configuration mistakes), in a dynamic LAG the cabling and configuration between the two or more connected computer network devices is confirmed. In addition, to preventing cabling or configuration mistakes (and, thus, preventing associated undesirable network behavior), a dynamic LAG provides automatic failover when a link fails, thereby preventing connectivity problems (while a static LAG continues to send traffic down a failed link, which causes the connection to fail).

However, a dynamic LAG that uses LACP is often slow to be formed or come up (e.g., a delay of 5-6 s) and often has slow response times. This is because LACP is complicated (the dynamic LAG is created by dynamical collaboration between computer network devices) and is intended for use with a server, not for layer 2 (L2) or layer 3 (L3) applications in a computer network device (such as a switch or a router). Moreover, a dynamic LAG that uses LACP often is slow to detect failures (e.g., a delay of up to 3 s) and/or is often slow to forward traffic (e.g., a delay of 1-2 s). The slow come-up and response times can degrade the performance of the computer network device and/or a system that includes the computer network device, and may result in dropped traffic.

### SUMMARY

A computer network device (such as a switch or a router) that implements a trunk is described. This computer network device may include: an interface circuit; a processor; and a memory that stores program instructions, where, when executed by the processor, the program instructions cause the computer network device to perform operations. Notably, during operation, the computer network device may receive a LAG command. In response, the computer network device may access a user LAG configuration and information specifying events for ports. Moreover, the computer network device may receive packet data units (PDUs) associated with the ports. Then, the computer network device may determine a dynamic LAG based at least in part on the user LAG configuration, the information and the PDUs. Next, the computer network device may implement the trunk having member ports in a physical layer based at least in part on the dynamic LAG, where the member ports in the trunk include at least a subset of member ports in the dynamic LAG.

Note that the determining of the dynamic LAG may not be compatible with IEEE 802.3ad and the dynamic LAG may not be compatible with IEEE 802.1ax.

Moreover, the events for the ports may specify availability of the ports.

Furthermore, a given PDU in the PDUs may specify: a destination address (such as a first media access control or MAC address), a source address (such as a second MAC address), a type of the given PDU, and a communication protocol (such as Ethernet). Note that the given PDU may include an identifier corresponding to the dynamic LAG. Additionally, the PDUs may specify second information associated with second ports in another computer network device, where the second ports are included in the ports. For example, the second ports may be included in the member ports in the dynamic LAG. When the dynamic LAG is determined, the second information may be used in a state machine. In some embodiments, the information and/or the second information is valid for a time interval.

Note that a given port in the ports may be a potential member port in the dynamic LAG when the second information for the given port matches third information for the given port in the user LAG configuration. Otherwise, the given port may be excluded from the dynamic LAG. Furthermore, the given port may have an associated state including one of: disabled, initialize, misconnected, standby, pending, wait, and operating.

In some embodiments, the dynamic LAG may include a software trunk configuration.

Note that the computer network device may detect a failure in the dynamic LAG in less than a first predefined time interval (such as 100-300 ms) and may forward traffic in less than a second predefined time interval (such as 100-300 ms).

Moreover, in some embodiments the dynamic LAG is determined in a distributed manner by at least the computer network device and another computer network device.

Furthermore, the member ports in the dynamic LAG may have a common priority. When there is a resource conflict, the member ports in the trunk may be selected from the member ports in the dynamic LAG on a first come, first serve basis.

Additionally, when determining the dynamic LAG, the computer network device may not use a LACP aggregation process to determine which of the ports wants to join the dynamic LAG.

Another embodiment provides a computer-readable storage medium for use with the computer network device. When executed by the computer network device, this computer-readable storage medium causes the computer network device to perform at least some of the aforementioned operations.

Another embodiment provides a method, which may be performed by the computer network device. This method includes at least some of the aforementioned operations.

This Summary is provided for purposes of illustrating some exemplary embodiments, so as to provide a basic understanding of some aspects of the subject matter described herein. Accordingly, it will be appreciated that the above-described features are examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE FIGURES

FIG. 1 is a block diagram illustrating an example of communication among access points and electronic devices in a network in accordance with an embodiment of the present disclosure.
FIG. 2 is a flow diagram illustrating an example of a method for implementing a trunk using a computer network device in FIG. 1 in accordance with an embodiment of the present disclosure.
FIG. 3 is a drawing illustrating an example of communication among components in an electronic device in FIG. 1 in accordance with an embodiment of the present disclosure.
FIG. 4 is a flow diagram illustrating an example of a dynamic fast link aggregation control protocol (dFLACP) in accordance with an embodiment of the present disclosure.
FIG. 5 is a flow diagram illustrating an example of a peer-information state machine in accordance with an embodiment of the present disclosure.
FIG. 6 is a block diagram illustrating an example of a dynamic LAG mis-cabling topology in accordance with an embodiment of the present disclosure.
FIG. 7A is a flow diagram illustrating an example of a port-information state machine in accordance with an embodiment of the present disclosure.
FIG. 7B is a flow diagram illustrating an example of a port-information state machine in accordance with an embodiment of the present disclosure.
FIG. 7C is a flow diagram illustrating an example of a port-information state machine in accordance with an embodiment of the present disclosure.
FIG. 8 is a flow diagram illustrating an example of a centralized implementation of the dFLACP in accordance with an embodiment of the present disclosure.
FIG. 9 is a flow diagram illustrating an example of a distributed implementation of the dFLACP in accordance with an embodiment of the present disclosure.
FIG. 10 is a block diagram illustrating an example of an electronic device in accordance with an embodiment of the present disclosure.

Note that like reference numerals refer to corresponding parts throughout the drawings. Moreover, multiple instances of the same part are designated by a common prefix separated from an instance number by a dash.

### DETAILED DESCRIPTION

A computer network device (such as a switch or a router) that implements a trunk is described. During operation, the computer network device may receive a LAG command. In response, the computer network device may access a user LAG configuration and information specifying events for ports. Moreover, the computer network device may receive PDUs associated with the ports. Then, the computer network device may determine a dynamic LAG based at least in part on the user LAG configuration, the information and the PDUs. Next, the computer network device may implement the trunk having member ports in a physical layer based at least in part on the dynamic LAG, where the member ports in the trunk include at least a subset of member ports in the dynamic LAG.

By determining the dynamic LAG, these communication techniques may allow the trunk to be rapidly formed and to have rapid response times. For example, the computer network device may rapidly detect a failure in the dynamic LAG (e.g., within 100-300 ms) and/or may rapidly forward traffic (e.g., with a delay of 100-300 ms). Consequently, the communication techniques may improve the performance of the computer network device and/or a system that includes the computer network device, and may reduce or eliminated dropped traffic. Therefore, the communication techniques may improve the user experience when using the computer network device and/or the system that includes the computer network device.

In the discussion that follows, an access point and/or an electronic device (such as a recipient electronic device, which is sometimes referred to as a 'client') may communicate packets or frames in accordance with a wireless communication protocol, such as an Institute of Electrical and Electronics Engineers (IEEE) 802.11 standard (which is sometimes referred to as 'Wi-Fi,' from the Wi-Fi Alliance of Austin, Texas), Bluetooth (from the Bluetooth Special Interest Group of Kirkland, Washington), and/or another type of wireless interface. In the discussion that follows, Wi-Fi is used as an illustrative example. For example, an IEEE 802.11 standard may include one or more of: IEEE 802.11a, IEEE 802.11b, IEEE 802.11g, IEEE 802.11-2007, IEEE 802.11n, IEEE 802.11-2012, IEEE 802.11-2016, IEEE 802.11ac, IEEE 802.11ax, IEEE 802.11ba, IEEE 802.11be, or other present or future developed IEEE 802.11 technologies.

However, a wide variety of communication protocols (such as Long Term Evolution or LTE, another cellular-telephone communication protocol, etc.) may be used. The wireless communication may occur in one or more bands of frequencies, such as: a 900 MHz, a 2.4 GHz, a 5 GHz, 6 GHz, the Citizens Broadband Radio Spectrum or CBRS (e.g., a frequency band near 3.5 GHz), a band of frequencies used by LTE or another cellular-telephone communication protocol or a data communication protocol, and/or a 60 GHz frequency band. (Note that IEEE 802.11ad communication over a 60 GHz frequency band is sometimes referred to as 'WiGig.' In the present discussion, these embodiments also encompassed by 'Wi-Fi.') In some embodiments, communication between electronic devices may use multi-user transmission (such as orthogonal frequency division multiple access or OFDMA).

Moreover, the electronic device and/or the access point may communicate with one or more other access points and/or computers in a network using a wireless or a wired communication protocol, such as an IEEE 802.11 standard, an IEEE 802.3 standard (which is sometimes referred to as 'Ethernet') and/or another type of wired or wireless interface. In the discussion that follows, Ethernet is used as an illustrative example of communication between the electronic device and/or the access point and the one or more other access points and/or computers in the network.

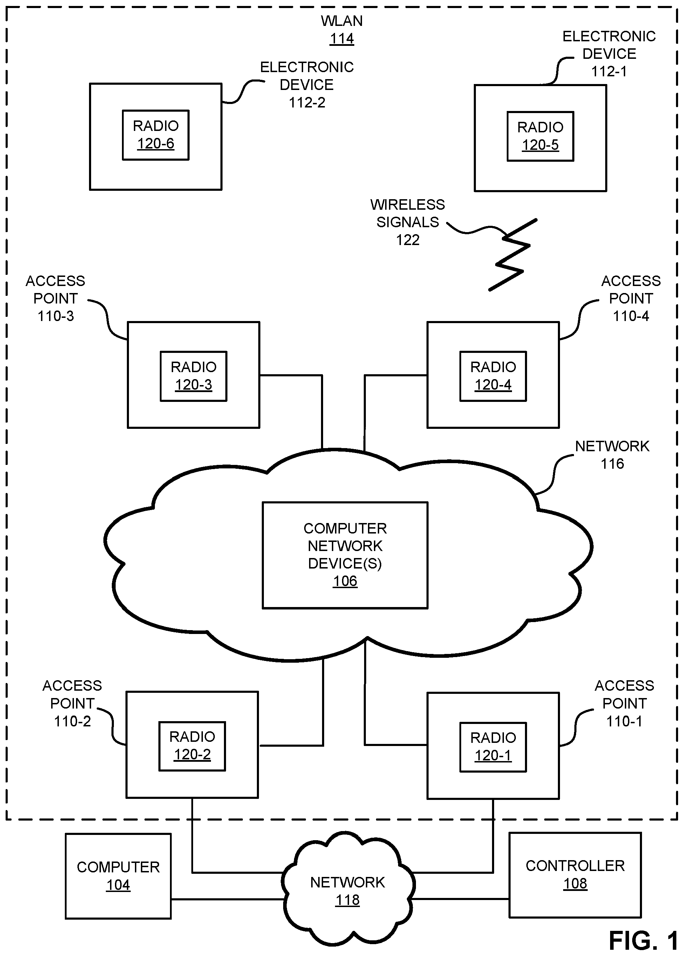

FIG. 1 presents a block diagram illustrating an example of communication among one or more access points 110 and electronic devices 112 (such as a cellular telephone, and which are sometimes referred to as 'clients') in a WLAN 114 (which is used as an example of a network) in accordance with some embodiments. Access points 110 may communicate with each other in WLAN 114 using wireless and/or wired communication (such as by using Ethernet or a communication protocol that is compatible with Ethernet). Note that access points 110 may include a physical access point and/or a virtual access point that is implemented in software in an environment of an electronic device or a computer. In addition, at least some of access points 110 (such as access points 110-3 and 110-4) may communicate with electronic devices 112 using wireless communication.

The wired and/or wireless communication among access points 110 in WLAN 114 may occur via network 116 (such as an intra-net, a mesh network, point-to-point connections and/or the Internet) and may use a network communication protocol, such as Ethernet. For example, WLAN 114 may include one or more computer network devices 106 (e.g., a switch or a router). In some embodiments, the one or more computer network device 106 may include a stack of multiple computer network devices (which are sometimes referred to as 'stacking units').

Furthermore, the wireless communication using Wi-Fi may involve: transmitting advertising frames on wireless channels, detecting one another by scanning wireless channels, establishing connections (for example, by transmitting association or attach requests), and/or transmitting and receiving packets or frames (which may include the association requests and/or additional information as payloads). In some embodiments, the wired and/or wireless communication among access points 110 also involves the use of dedicated connections, such as via a peer-to-peer (P2P) communication technique. Therefore, access points 110 may support wired communication outside of WLAN 114 (such as Ethernet) and wireless communication within WLAN 114 (such as Wi-Fi), and one or more of access points 110 may also support a wired communication protocol for communicating via network 118 with electronic devices (such as a computer 104 or a controller 108 of WLAN 114, which may be remoted located from WLAN 114).

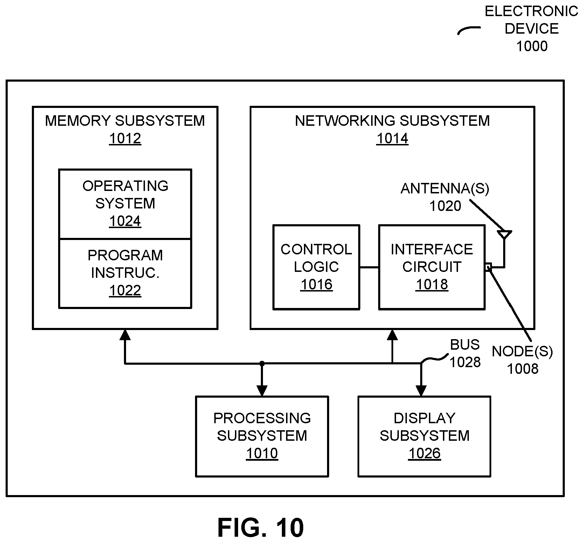

As described further below with reference to FIG. 10, the one or more computer network device 106, access points 110 and/or electronic devices 112 may include subsystems, such as a networking subsystem, a memory subsystem and a processor subsystem. In addition, access points 110 and electronic devices 112 may include radios 120 in the networking subsystems. More generally, access points 110 and electronic devices 112 can include (or can be included within) any electronic devices with the networking subsystems that enable access points 110 and electronic devices 112 to communicate with each other using wireless and/or wired communication. This wireless communication can comprise transmitting advertisements on wireless channels to enable access points 110 and/or electronic devices 112 to make initial contact or detect each other, followed by exchanging subsequent data/management frames (such as association requests and responses) to establish a connection, configure security options (e.g., Internet Protocol Security), transmit and receive packets or frames via the connection, etc. Note that while instances of radios 120 are shown in access points 110 and electronic devices 112, one or more of these instances may be different from the other instances of radios 120.

As can be seen in FIG. 1, wireless signals 122 (represented by a jagged line) are transmitted from radio 120-4 in access point 110-4. These wireless signals may be received by radio 120-5 in electronic device 112-1. Notably, access point 110-4 may transmit packets or frames. In turn, these packets or frames may be received by electronic device 112-1. Moreover, access point 110-4 may allow electronic device 112-1 to communicate with other electronic devices, computers and/or servers via networks 116 and/or 118.

Note that the communication among access points 110 and/or with electronic devices 112 (and, more generally, communication among components in WLAN 114) may be characterized by a variety of performance metrics, such as: a received signal strength (RSSI), a data rate, a data rate for successful communication (which is sometimes referred to as a 'throughput'), an error rate (such as a retry or resend rate), a mean-square error of equalized signals relative to an equalization target, intersymbol interference, multipath interference, a signal-to-noise ratio, a width of an eye pattern, a ratio of number of bytes successfully communicated during a time interval (such as 1-10 s) to an estimated maximum number of bytes that can be communicated in the time interval (the latter of which is sometimes referred to as the 'capacity' of a communication channel or link), and/or a ratio of an actual data rate to an estimated data rate (which is sometimes referred to as 'utilization').

In the described embodiments processing a packet or frame in access points 110 and electronic devices 112 includes: receiving signals (such as wireless signals 122) corresponding to the packet or frame; decoding/extracting the packet or frame from received wireless signals 122 to acquire the packet or frame; and processing the packet or frame to determine information contained in the packet or frame.

Although we describe the network environment shown in FIG. 1 as an example, in alternative embodiments, different numbers or types of electronic devices may be present. For example, some embodiments comprise more or fewer electronic devices. As another example, in another embodiment, different electronic devices are transmitting and/or receiving packets or frames.

As noted previously, existing techniques (such as LACP) for determining a dynamic LAG are slow to be formed, have slow response times, are complicated, and are not intended for use with computer network devices. These problems can degrade performance and may result in dropped traffic.

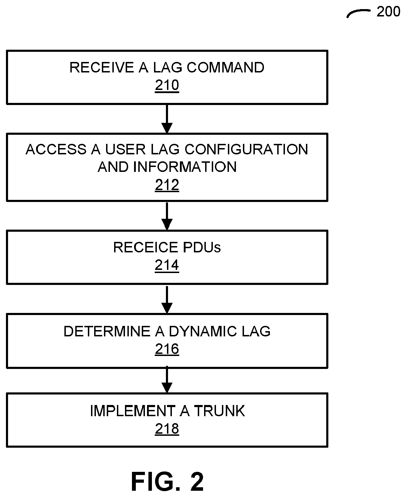

As described further below with reference to FIGs. 2-9, in order to address these problems, the one or more computer network devices 106 may implement the dFLACP to determined a dynamic LAG (which is sometimes referred to as a 'dynamic fast LAG' or a 'dyFast LAG'). Notably, a given one of the one or more computer network devices 106 may receive a LAG command, e.g., from a computer 104. In response, the computer network device may access a user LAG configuration and information specifying events for ports (such as availability of the ports). For example, the user LAG configuration and/or the information may be accessed in local memory and/or remotely (e.g., from controller 108). Moreover, the computer network device may receive PDUs associated with the ports. For example, the PDUs may be received from other computer network devices in the one or more computer network devices 106.

Then, the computer network device may determine a dynamic LAG based at least in part on the user LAG configuration, the information and the PDUs. Next, the computer network device may implement the trunk having member ports in a physical layer based at least in part on the dynamic LAG, where the member ports in the trunk include at least a subset of member ports in the dynamic LAG. Note that the determining of the dynamic LAG may not be compatible with IEEE 802.3ad and the dynamic LAG may not be compatible with IEEE 802.1ax. For example, when determining the dynamic LAG, the computer network device may not use a LACP aggregation process to determine which of the ports wants to join the dynamic LAG. In some embodiments, the dynamic LAG may include a software trunk configuration.

Note that a given PDU may be associated with the dFLACP. Notably, a given PDU in the PDUs may specify: a destination address (such as a first MAC address), a source address (such as a second MAC address), a type of the given PDU, and/or a communication protocol (such as Ethernet). Furthermore, the given PDU may include an identifier corresponding to the dynamic LAG. Additionally, the PDUs may specify second information associated with second ports in another computer network device in the one or more computer network devices 106, where the second ports are included in the ports. For example, the second ports may be included in the member ports in the dynamic LAG. When the dynamic LAG is determined, the second information may be used in a state machine associated with the dFLACP. In some embodiments, the information and/or the second information is valid for a time interval.

Moreover, a given port in the ports may be a potential member port in the dynamic LAG when the second information for the given port matches third information for the given port in the user LAG configuration. Otherwise, the given port may be excluded from the dynamic LAG. Furthermore, the given port may have an associated state including one of: disabled, initialize, misconnected, standby, pending, wait, and operating.

Note that the computer network device may detect a failure in the dynamic LAG in less than a first predefined time interval (such as 100-300 ms) and/or may forward traffic in less than a second predefined time interval (such as 100-300 ms).

Moreover, the member ports in the dynamic LAG may have a common priority. When there is a resource conflict, the member ports in the trunk may be selected from the member ports in the dynamic LAG on a first come, first serve basis.

Furthermore, in some embodiments the dynamic LAG is determined in a distributed manner by at least the computer network device and another computer network device. For example, the dynamic LAG may be determined by two or more of the one or more computer network devices 106 and/or by controller 108.

In this way, the one or more computer network devices 106 may allow the trunk to be rapidly formed and to have rapid response times. Consequently, the dFLACP in the communication techniques may improve the performance of the one or more computer network devices 106 and/or a system that includes the one or more computer network devices 106, and may reduce or eliminated dropped traffic. Therefore, the communication techniques may improve the user experience when using the one or more computer network devices 106 and/or the system that includes the one or more computer network devices 106.

We now describe embodiments of a method. FIG. 2 presents a flow diagram illustrating an example of a method 200 for implementing a trunk in accordance with some embodiments. This method may be performed by a computer network device (such as one of the one or more computer network devices 106 in FIG. 1).

During operation, the computer network device may receive a LAG command (operation 210). In response, the computer network device may access a user LAG configuration and information (operation 212) specifying events for ports. For example, the events for the ports may specify availability of the ports.

Moreover, the computer network device may receive PDUs (operation 214) associated with the ports.

Then, the computer network device may determine a dynamic LAG (operation 216) based at least in part on the user LAG configuration, the information and the PDUs. Note that the determining of the dynamic LAG may not be compatible with IEEE 802.3ad and the dynamic LAG may not be compatible with IEEE 802.1ax.

Next, the computer network device may implement the trunk (operation 218) having member ports in a physical layer based at least in part on the dynamic LAG, where the member ports in the trunk include at least a subset of member ports in the dynamic LAG.

In some embodiments, a given PDU in the PDUs may specify: a destination address (such as a first MAC address), a source address (such as a second MAC address), a type of the given PDU, and/or a communication protocol (such as Ethernet). Note that the given PDU may include an identifier corresponding to the dynamic LAG. Additionally, the PDUs may specify second information associated with second ports in another computer network device, where the second ports are included in the ports. For example, the second ports may be included in the member ports in the dynamic LAG. When the dynamic LAG is determined, the second information may be used in a state machine. Moreover, the information and/or the second information is valid for a time interval.

Note that a given port in the ports may be a potential member port in the dynamic LAG when the second information for the given port matches third information for the given port in the user LAG configuration. Otherwise, the given port may be excluded from the dynamic LAG. Furthermore, the given port may have an associated state including one of: disabled, initialize, misconnected, standby, pending, wait, and operating.

In some embodiments, the dynamic LAG may include a software trunk configuration.

The computer network device may detect a failure in the dynamic LAG in less than a first predefined time interval (such as 100-300 ms) and/or may forward traffic in less than a second predefined time interval (such as 100-300 ms).

Moreover, in some embodiments the dynamic LAG is determined in a distributed manner by at least the computer network device and another computer network device.

Furthermore, the member ports in the dynamic LAG may have a common priority. When there is a resource conflict, the member ports in the trunk may be selected from the member ports in the dynamic LAG on a first come, first serve basis.

Additionally, when determining the dynamic LAG (operation 216), the computer network device may not use a LACP aggregation process to determine which of the ports wants to join the dynamic LAG.

In some embodiments of method 200, there may be additional or fewer operations. Furthermore, the order of the operations may be changed, and/or two or more operations may be combined into a single operation.

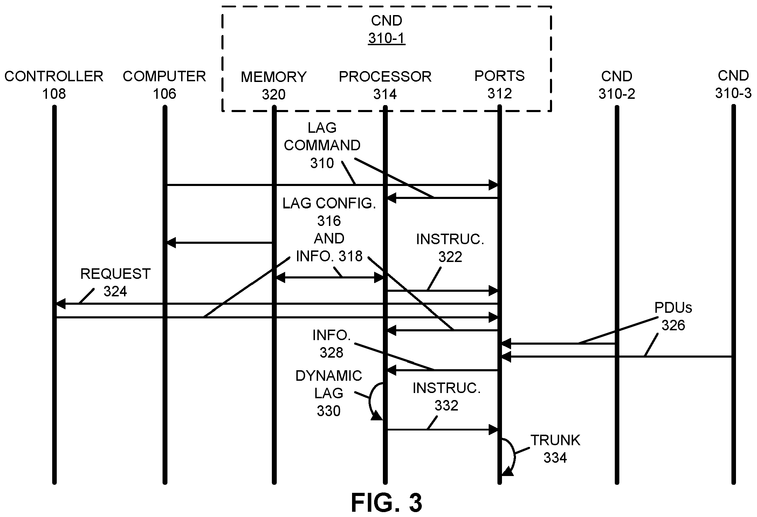

FIG. 3 presents a drawing illustrating an example of communication among components in computer network devices 310 in accordance with some embodiments. Notably, computer 104 may provide a LAG command 310. This LAG command 310 may be received by one of ports 312 in computer network device (CND) 310-1 (such as one of computer network devices 106 in FIG. 1). This port may provide LAG command 310 to processor 314 in computer network device 310-1.

Processor 314 may access a user LAG configuration 316 and information 318 specifying events for ports 312. For example, the user LAG configuration 316 and information 318 may be accessed in memory 320 in computer network device 310-1. Alternatively or additionally, processor 314 may instruct 322 one of ports 312 to request 324 the user LAG configuration 316 and information 318 from controller 108. After receiving the user LAG configuration 316 and information 318 from controller 108, one of ports 312 may provide the user LAG configuration 316 and information 318 to processor 314.

Moreover, computer network device 310-2 and 310-3 may provide PDUs 326 to computer network device 310-1. After receiving PDUs 326 on ports 312, ports 312 may provide information 328 included in PDUs 326 and about or associated with PDUs 326 and/or ports 312 to processor 314.

Then, processor 314 may determine a dynamic LAG 330 based at least in part on the user LAG configuration 316, information 318 and information 328. Next, processor 314 may implement trunk 334 having member ports in a physical layer based at least in part on dynamic LAG 330, where the member ports in trunk 334 include at least a subset of member ports in dynamic LAG 330. For example, processor 314 may instruct 332 ports 312 to implement trunk 334, such as by changing configurations or settings associated with the member ports.

While FIG. 3 illustrates communication between components using unidirectional or bidirectional communication with lines having single arrows or double arrows, in general the communication in a given operation in these figures may involve unidirectional or bidirectional communication.

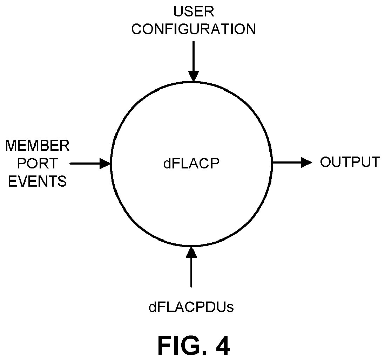

FIG. 4 presents a flow diagram illustrating an example of a dFLACP in accordance with some embodiments. The dFLACP may have a three-layer structure (including the dyFast LAG, a software trunk, and a hardware trunk), which shows the interrelationship of the LAG, the trunk and the member ports. Notably, the member ports of the dyFast LAG may not function as individual ports, but they are also not guaranteed to be in the final trunk group. Instead, the dFLACP protocol may decide which ports are (or are not) included in the final hardware trunk group. In some embodiments, dFLACP may use the user configuration (such as peer information, member ports, etc.), the member port events (such as up/down or availability) and periodic timers, and dFLACPDUs received on the member ports (with peer information for the aggregation process and state machines) to output a software trunk entry that is used to program or configure a hardware trunk entry. For example, a software dyFast LAG structure for LAG 3 may include member ports 1/1/1, 1/1/3, 1/1/5, 2/1/6, while 1/1/5 is link down and the peer for 1/1/3 is not ready. Consequently, trunk identifier 6 may specify member ports 1/1/1, 1/1/3 and 2/16, and hardware trunk identifier 6 may include 1/1/1 and 2/1/6 (which excludes 1/1/3 because the peer for 1/1/3 is not ready). Note that the dFLACPDUs that are exchanged ensures that there is a dynamic collaboration of all the ports in a system to determine which ports want to join a trunk group.

The LAG determined using dFLACP as the control protocol is sometimes referred to as dyFast LAG in order to distinguish it from existing static and dynamic LAGs. The difference between a dyFast LAG and a dynamic LAG is the control protocol that is used to pick the trunk member port from the configured LAG member ports. Notably, a dynamic LAG uses LACP, while dyFast LAG uses dFLACP.

For example, a dyFast LAG named 'data-cen' with lag identifier (id) 22 and member ports 1/3/1 and 1/3/2 may be configured as follows: device(config)# lag data-cen dyfast id 22; and device(config-lag-data-cen)# ports ethernet 1/3/1 ethernet 1/3/2. Note that the 'dyfast' key word specifies that this LAG uses the dFLACP as the control protocol. Other options may include 'static' for static LAG without control protocol, and 'dynamic' for LACP as the control protocol.

Moreover, LAG identifiers may be unique for each LAG in a system. A LAG identifier may not be assigned to more than one LAG. If a LAG identifier is already used, the command line interface or user interface may reject the new LAG configuration and may display an error message that suggests the next available LAG identifier that can be used.

Two factors may help dFLACP provide fast failure detection and forwarding capability. One factor is peer information-based aggregation and the other factor is a 100 ms-based timer.

We now describe the theory of operation of peer information and a peer-information record. dFLACP may use a PDU to exchange information between the local side (which is sometimes referred to as the 'actor side') and the peer side (which is sometimes referred to as the 'partner side'). The PDU used by dFLACP is sometimes called 'dFLACPDU' and it may be sent periodically by all ports in a dyFast LAG when a given port is not in a PORT_dyFast_DISABLED state (as described in port state machine).

dFLACP may not have an LACP-like aggregating process to check which port wants to join the aggregator. Instead, dFLACP may use peer information to reach the same result, but much more efficiently.

In order to understand the peer information, consider the local information. For each dyFast LAG, the local information of the LAG may refer to its (system mac, dFLACP_key) combination. The system_mac may be the MAC address of the electronic device. Moreover, for each dyFast LAG, a unique dFLACP_key may be generated based upon the LAG identifier. For example, dFLACP_key may equal the LAG identifier plus 20000. Note that all member ports in this dyFast LAG may share the same local information. This local information may be embedded into the dFLACPDU that is sent over to its peer port. When its peer port X receives the dFLACPDU, the embedded local information may become the peer-information record of peer port X. As with LACP, for the dyFast LAG port that is being aggregated, the local port and the peer port share the same local information and peer information.

Because the local information of the dyFast LAG is guaranteed to be the same because of the user configuration restriction, the local check operation may no longer be required. However, the peer information may still need to be check in order to determine whether two member ports from the same dyFast LAG can be considered to be aggregated together into the same trunk.

Note that there may be a 'per-LAG peer information record' for the whole LAG and there may be a per-member port peer-information record for each of the LAG member ports. If the peer-information record of a port does not match with the peer-information record of the LAG, the port may not be aggregated into the final trunk group. However, if the peer-information record of a port matches with the peer-information record of the LAG, the port may be aggregated into the final trunk group if other criteria meets or matches in the port state machine.

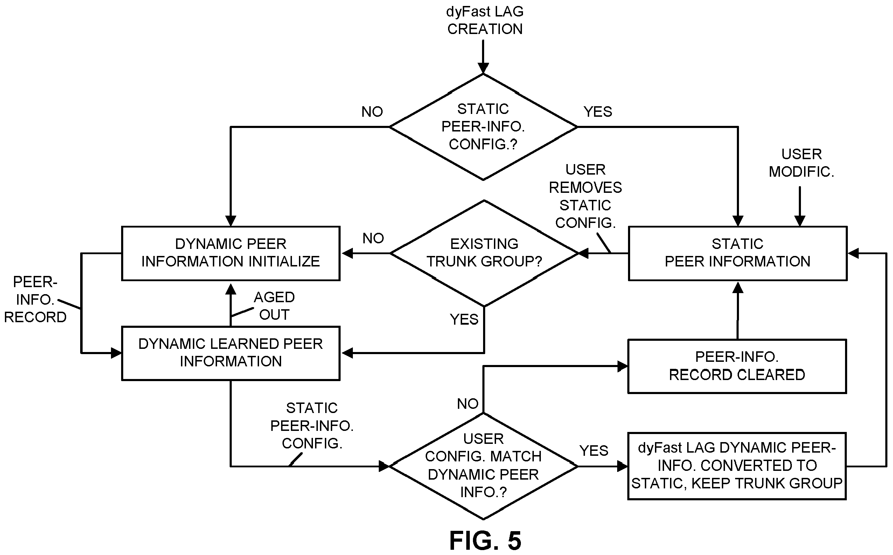

The per-LAG peer-information record may be obtained by a static configuration by a customer command line interface or user interface. When there is no user configuration, the per-LAG peer-information record may also dynamically learned through the peer-information state machine. FIG. 5 presents a flow diagram illustrating an example of a peer-information state machine in accordance with some embodiments.

We now describe the theory of operation of the dFLACP port state machine. Any of the dyFast LAG configure member ports may be in one of the following states at any given time.

PORT_dyFast_DISABLED (also known as a 'DISABLED' state). A port in this state is LINK DOWN or user disabled. Moreover, a port in this state may not be in either a software trunk or a hardware trunk entry, and it may not send a periodic dFLACPDU or process a dFLACPDU.

PORT_dyFast_INIT (also known as an 'INIT' state). A port in this state is LINK UP, and can transmit and receive a dFLACPDU. Note that a port that does not receive a dFLACPDU for long time may stay in this state until it receives a dFLACPDU. Moreover, a port in this state is not in either a software trunk or a hardware trunk entry. The dFLACPDU it sends may be with INIT bit 'ON' in the local state information.

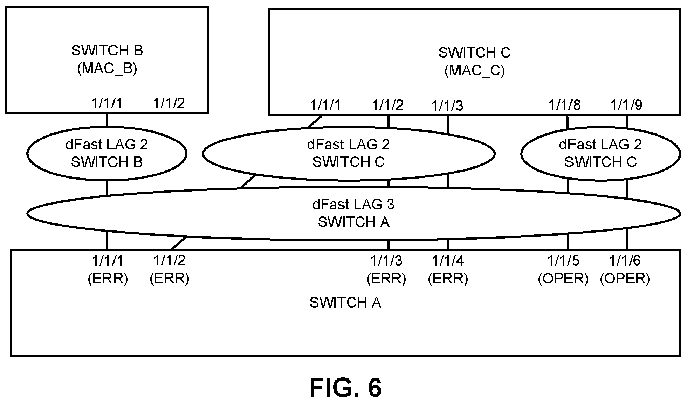

PORT_dyFast_MISMATCH_ERROR (also known as a 'MISMTACH_ERR' or an 'ERR' state). As shown in FIG. 6, which presents a block diagram illustrating an example of a dynamic LAG mis-cabling topology in accordance with some embodiments, a port in this state is mis-connected. Switch A in FIG. 6 implements dyFast LAG identifier 3 with member ports 1/1/1 through 1/1/6, a dFLACP_key equal to 20003, and user-configuration peer information (MAC_C, dFLACP_key defined as 20003). Moreover, switch B implements dyFast LAG identifier 2 with ports 1/1/1 and 1/1/2, and a dFLACP_key equal to 20002. Furthermore, switch C implements dyFast LAG identifier 2 with ports 1/1/1, 1/1/2 and 1/1/3, and a dFLACP_key equal to 20002, and dyFast LAG identifier 3 with ports 1/1/8 and 1/1/9, and a dFLACP_key equal to 20003.

In FIG. 6, port 1/1/1 to 1/1/4 of switch A are in this state because the peer information they received is different from the expected value. A port in the MISMATC_ERROR state may send an dFLACPDU with a mis-cabling bit 'ON' in the local state information. Moreover, a peer that receives this dFLACPDU may not continue to participate in the aggregation process, but may stay in a PENDING mode (which is described further below). Furthermore, a port in this state is not in either a software trunk or a hardware trunk entry. Note that port in this state can go to INIT state if it receives three continuous dFLACPDUs without a mis-match issue. Thus, dFLCAP may dynamically receive peer (or neighbor) information in the dFLACPDUs to detect mis-configuration of a port, which is then excluded from the trunk group.

PORT_dyFast_STBY (also known as a 'STBY' state). A port is in this state because there is no space in a software trunk entry or because the speed and duplex of the port do not match with the existing port in the software trunk entry of the OPER state. The dFLACPDU that this port sends may be with a STBY bit 'ON' in the local state information. Note that a port in this state is not in either a software trunk or a hardware trunk entry.

PORT_dyFast_PENDING (also known as a 'PENDING' state). A port is in this state because its peer port is either in a STBY or an ERR state. The dFLACPDU that this port sends may be with a pending bit 'ON' in the local state information. Note that a port in this state is not in either a software trunk or a hardware trunk entry.

PORT_dyFast_WAIT (also known as a 'WAIT' state). A port in this state may be added to a software trunk entry, but not to a hardware trunk entry. The dFLACPDU that this port sends may be with a wait bit 'ON' in the local state information. This is the final state before this port is moved into an OPER state. The port is in the WAIT state in order to wait for a peer port to confirm that it is also ready to go to the OPER state. Otherwise, assuming that the local port goes to the OPER state and then the peer port finds that it has no space in a hardware trunk and has to be in a STBY state, the traffic hashed to the local port may be black holed (i.e., silently discarded or dropped). The solution may be for local port to go out of the OPER state. However, this kind of flip may be avoided with the WAIT state. When both sides of the link are certain that they can go to the OPER state, then the port may go to the OPER state.

PORT_dyFast_OPER (also known as an 'OPER' state). A port in this state may be added into both a software and hardware trunk entry. The dFLACPDU that this port sends may be with the OPER bit 'ON.' This is the final stable state when a port is aggregated. Note that even when there is just one port in the OPER state, it may still be considered to be aggregated into the trunk group.

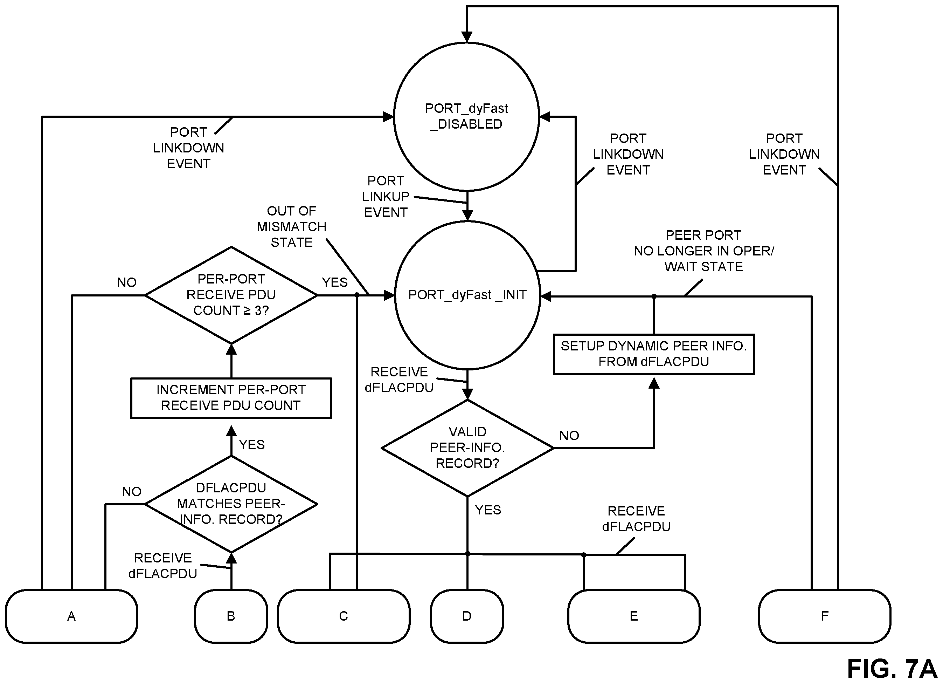

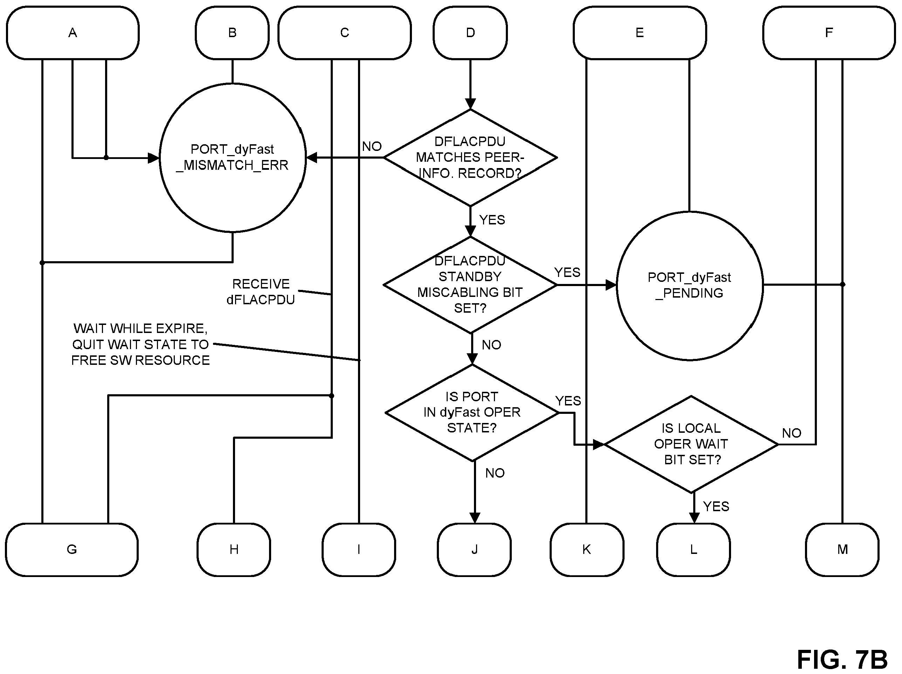

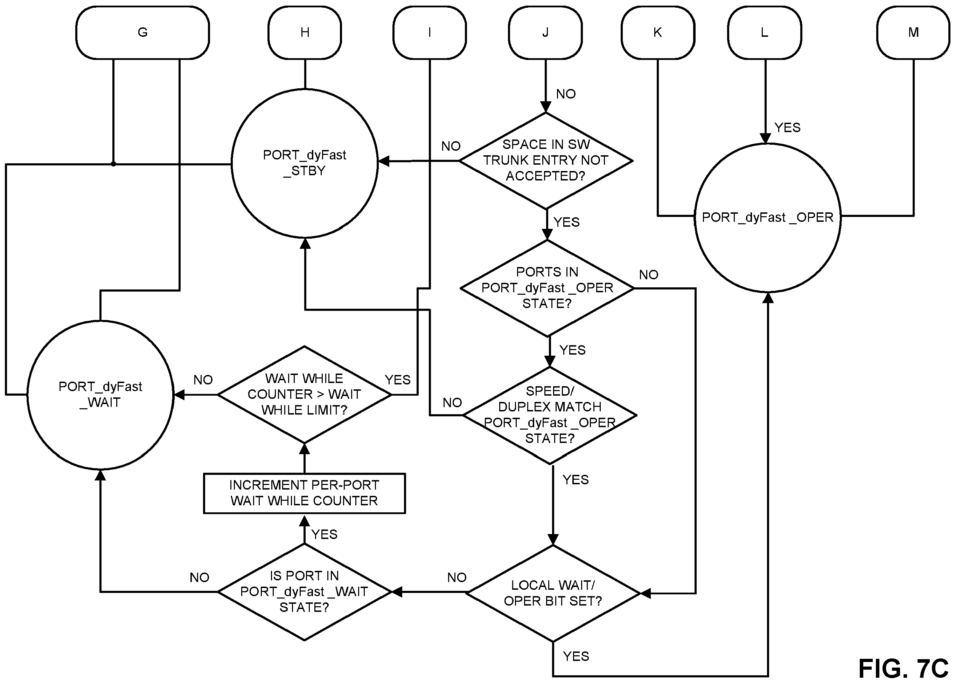

FIGs. 7A-7C present a flow diagram illustrating an example of a port-information state machine in accordance with some embodiments. Note that there are several state changes not covered in FIGs. 7A-7C. For example, when the peer-information record for a LAG is modified by a user configuration, a port in an ERR/STBY/WAIT/PENDING/OPER state may go to the INIT state unconditionally. Moreover, a member port in a dyFast LAG in an ERR/STBY/WAIT/PENDING/OPER state, if it stops to receive a dFLACPDU for the dfLACP_Retry times, may go to the INIT state unconditionally. Note that the default value for dfLACP_Retry may be 5, and the default dfLACP interval may be 200 ms. This means that, by default, if a port stops receiving a dFLACPDU for Is, it may go to the INIT state. Furthermore, a member port in a dyFast LAG in an ERR/STBY/WAIT/PENDING/OPER state, if it receives a peer-sequence number in a dFLACPDU that is unchanged for dfLACP_uni_directional_Retry times, it means that there may be a unidirectional link-level issue. In this case, the port may go to the PORT_dyFast_INIT state unconditionally.

In contrast with the LACP protocol standby link selection, all local ports from the same dyFast LAG may be considered to have the same priority. Consequently, there may not be a priority field at either the LAG or the LAG member port level. When there is resource conflict, the dFLACP may follow a first-come first-serve rule. For example, a typical conflict is when a LAG size is bigger than a trunk-entry size limit, the trunk-entry size has already reached the limit, and a link-up and speed-duplex matching port has to be in a STANDBY mode. In this case, which port is in the STANDBY mode may depend on the link-event sequence.

In some embodiments, there is a dyFast LAG with 13 member ports (1/1/1 through 1/1/13), and the hardware trunk table may only take up to 8 ports per trunk. If currently there are already 8 ports in the OPER mode (1/1/1 through 1/1/8). Then, if the link status of port 1/1/9 turns from down to up, this port may be in the STANDBY mode just based on the link-event timing sequence.

The dFLACPDU control packets may include an integral number of octets. The bits in each octet may be numbered from 0 to 7, where 0 is the low-order bit. When consecutive octets are used to represent a numerical value, the most-significant octet may be transmitted first, followed by successively less-significant octets. When encoding an element of a dFLACPDU: octets may be transmitted from top to bottom; within an octet, bits are shown with bit 0 to the left and bit 7 to the right, and are transmitted from left to right; and when consecutive octets are used to represent a binary number, the octet transmitted first has the more-significant value. Note that the dFLACPDUs may be IEEE 802.3 frames. They may be untagged packets and may be transmitted using the aforementioned network order. Table 1 presents an example of the fields in a dFLACPDU.

**Table 1.**

| dFLACPDU Field | Octets | Value |
|---|---|---|
| Destination Address (DA) | 6 | 00e0-5200-0000 |
| Source Address (SA) | 6 | |
| Type | 2 | 0×885a |
| Major Protocol | 1 | 0×05 (dFLACP) |
| Version | 1 | 0×01 |
| Length | 2 | |
| TLV type = Local Information | 1 | 0×01 |
| Local Information Length | 1 | 22 |
| Local System | 6 | |
| Local Key | 2 | |
| Local Port Identifier | 3 | |
| Local Port-State Information | 1 | |
| Local Sequence Number | 4 | |
| Local Reserved | 4 | |
| TLV type = Peer Information | 1 | 0×02 |
| Peer-Information Length | 1 | 22 |
| Peer System | 6 | |
| Peer Key | 2 | |
| Peer-Port Identifier | 3 | |
| Peer-Port State Information | 1 | |
| Peer-Sequence Number | 4 | |
| Peer Reserved | 4 | |
| TLV type = Terminator | 1 | |
| Terminator Length | 1 | 0×00 |
| Reserved | 60 | |
| Frame Check Sequence | 4 | |

The destination address in a dFLACPDU may have a value 00e0-5200-0000. Moreover, the source address in a dFLACPDU may carry the individual MAC address associated with the port through which the dFLACPDU was transmitted. A dFLACPDU may be type encoded with a value if 0×885a. Furthermore, the TLV type = local information field may indicate the nature of the information carried in this TLV-tuple. Local information may be identified by the integer value 0×01. Additionally, the local information length field may indicate the length (in octets) of this TLV-tuple. Local information may use a length value of 22 (0×16). Additionally, the local system field may include the local system identifier encoded as a MAC address. This value may be the same across all ports on the same switch. Note that the local key field may include the local dFLACP_Key generated from the LAG identifier of the dyFast LAG. The value may be the same for all member ports of the same dyFast LAG.

Moreover, the local port identifier may include the port number assigned to the port by the system sending the PDU, encoded as an unsigned integer. Zero may not be a valid value for either the local-port or the peer-port identifier. The local port-state information may include the local-state variables for the port, encoded as individual bits within a single octet. Furthermore, the local sequence number may include the per-port sequence number for each instance of a dFLACPDU that it sends. The information may be used to detect a single direction failure. The TLV type = peer information field may indicate the nature of the information carried in this TLV-tuple. Peer information may be identified by the integer value 0×02. Additionally, the peer-information length field may indicate the length (in octets) of this TLV-tuple. Peer information may use a length value of 22 (0×16). Note that the peer system field may include the system identifier of the peer switch, encoded as a MAC address.

The peer key may include the dFLACP_Key of the peer system. Moreover, the peer-port identifier may include the port number associated with this link assigned to the port by the peer, encoded as an unsigned integer. The peer-port state information may include the local view of the state variables of the peer port, depicted as a local/peer-port state information field in the dFLACPDU and encoded as individual bits within a single octet, as defined for the local port-state information. Furthermore, the peer-sequence number may include the per-port sequence number that a local port received from the last dFLACPD it received from its peer port. The information may be used to detect a single direction failure. The TLV type = terminator field may indicate the nature of the information carried in this TLV-tuple. Terminator (end-of-message) information may be identified by the integer value 0×00. Additionally, the terminator length field may indicate the length (in octets) of this TLV-tuple. Terminator information may use a length value of 0 (0×00). Note that the reserved field may include 60 octets that are reserved for use in future extensions to the protocol. The reserved field may ensure that all valid dFLACPDUs have a fixed PDU size of 128 octets, regardless of the version of the protocol. This may ensure that different versions may be able to receive PDUs even if they include additional information that cannot be interpreted (and will be ignored) by earlier versions. Thus, this approach for including additional information in the PDUs may be backwards compatible. In some embodiments, the frame check sequence may be generated by the underlying MAC.

We now describe system parameters. Hello time may be the number of 100-ms time intervals between periodic transmissions of the dFLACPDU when a port is not in the DISABLED state. The hello time may be used by the per-port hello timer. The Hello time may have a per-LAG value, so all ports in the same LAG may share this value. In some embodiments, the hello time may have an integer value, with a default value of 2 and a range between 1 and 50. Note that the hello timer is a per-LAG member port timer that serves to ensure periodic transmission of the dfLACPDUs when it is not in the DISABLED state. The timeout value of the hello timer is set by the hello time parameter of the LAG.

Moreover, a wait while time may be the number of 100-ms intervals to stay in a WAIT state before being moved to an INIT state. The wait while time may be used by the per-port wait while timer. The value of the wait while time may be a per-LAG configuration, so all ports in the same LAG may share this value. In some embodiments, the wait while time may have an integer value, with a default value of 20 and a range between 2 and 50. Note that the wait while timer may be a per-LAG member port timer that starts when a port enters the PORT_dyFast_WAIT state for other states. When the wait while timer expires, it may move the port from the PORT_dyFast_WAIT state to the PORT_dyFast_INIT state. The wait while timer may ensure that the port may not remain in the PORT_dyFast_WAIT state indefinitely.

Furthermore, a peer information age time may be the number of seconds for the dynamically learned peer-information record of a per-dyFast LAG to age out. It may be used by the per-LAG peer-information aging timer and may affect the dynamically learned peer-information record of the LAG. In some embodiments, the peer information age time may have an integer value, with a default value of 2 and a range between 1 and 20. Note that the peer-information age timer may be a per-LAG timer that serves to ensure that the dynamically learned peer information is discarded when its age exceeds the value of the peer-information age-time parameter.

Additionally, a dfLACP_Retry time may determine, for a member port in a dyFast LAG in a ERR/STBY/WAIT/PENDING/OPER state, that the port goes to the INIT state unconditionally if member port stops to receive a dFLACPDU for dfLACP _Retry times. In some embodiments, the dfLACP _Retry time may have an integer value, with a default value of 5 and a range between 3 and 20.

A dfLACP_uni_directional_Retry time may determine, for a member port in a dyFast LAG in a ERR/STBY/WAIT/PENDING/OPER state, that there may be a unidirectional link-level issue if the member port a peer-sequence number of a dFLACPDU that is unchanged for dfLACP_uni_directional_Retry times. Note that the port may go to the PORT_dyFast_INIT state unconditionally. In some embodiments, the dfLACP_uni_directional_Retry time may have an integer value, with a default value of 5 and a range between 3 and 20.

Note that the system may check to make sure that the peer-information age time is greater than the product of the dfLACP _Retry time and the hello time.

In some embodiments, the system may include a reserved information while timer. This per-LAG member port timer may be set to the dfLACP_retry time whenever a valid dFLACPDU is received. Once the reserved information while timer expires, for port in an ERR/STBY/WAIT/PENDING/OPER state, the port may be moved to the INIT state unconditionally. The reserved information while timer may ensure that once a dFLACPDU stops being received from a peer port, the local port may be moved out of the trunk.

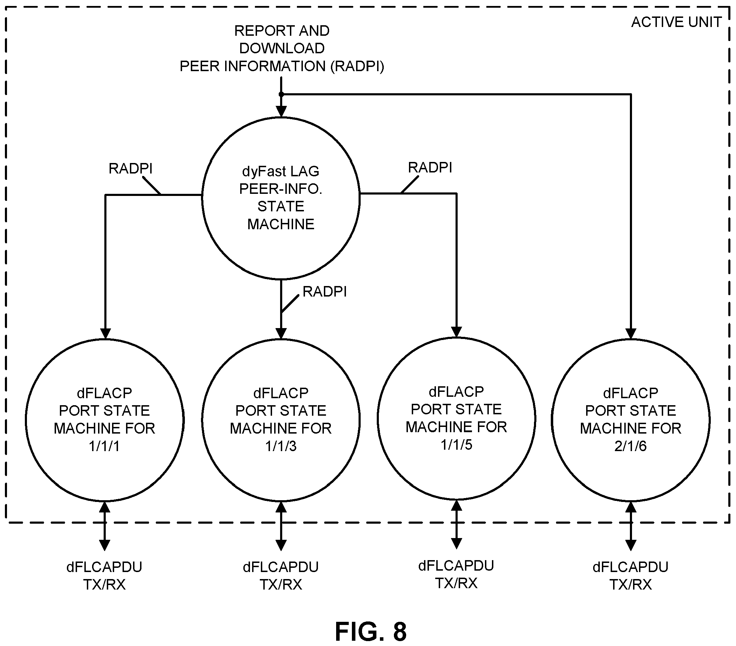

The dFLACP may be implemented in a centralized manner, which means that all the state machines (e.g., the per-lag peer-information state machine and the per-port state machine) may be running on the same processor. This is shown in FIG. 8, which presents a flow diagram illustrating an example of a centralized implementation of the dFLACP in accordance with some embodiments. In FIG. 8, all dFLACPDUs are sent by and processed by the active unit.

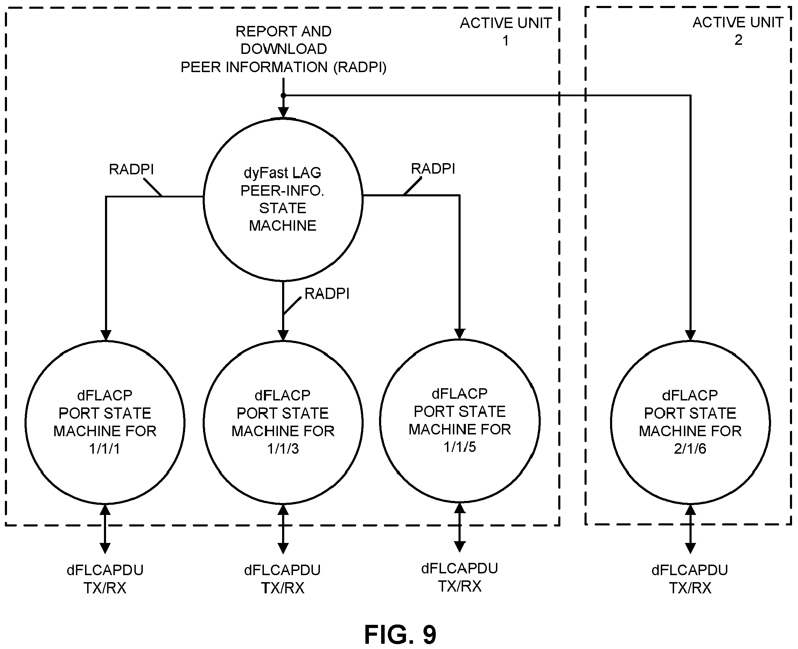

However, the fast speed of the dFLACP may come with a certain price. For example, in order for a stacking system with a large number computer network devices and ports to have a 100-ms level timer running on hundreds of ports may present a large burden to the processor if a centralized implementation is used. Consequently, in some embodiments, the dFLACP may be implemented in a distributed manner, which may reduce the system load. This is shown in FIG. 9, which presents a flow diagram illustrating an example of a distributed implementation of the dFLACP in accordance with some embodiments. Note that active unit 1 and active unit 2 may communication via inter process communication.

In some embodiments, dFLACP may be implemented in layer 1.5 between layer 1 (or a physical layer) and layer 2, which may implement a spanning tree protocol (STP). Thus, dFLCAP may be implemented between the user configuration and the hardware trunk.

We now describe embodiments of an electronic device, which may perform at least some of the operations in the communication techniques. FIG. 10 presents a block diagram illustrating an example of an electronic device 1000 in accordance with some embodiments, such as one of computer 104, the one or more computer network devices 106, controller 108, one of access points 110 or one of electronic devices 112. This electronic device includes processing subsystem 1010, memory subsystem 1012, and networking subsystem 1014. Processing subsystem 1010 includes one or more devices configured to perform computational operations. For example, processing subsystem 1010 can include one or more microprocessors, ASICs, microcontrollers, programmable-logic devices, one or more graphics process units (GPUs) and/or one or more digital signal processors (DSPs).

Memory subsystem 1012 includes one or more devices for storing data and/or instructions for processing subsystem 1010 and networking subsystem 1014. For example, memory subsystem 1012 can include dynamic random access memory (DRAM), static random access memory (SRAM), and/or other types of memory. In some embodiments, instructions for processing subsystem 1010 in memory subsystem 1012 include: one or more program modules or sets of instructions (such as program instructions 1022 or operating system 1024), which may be executed by processing subsystem 1010. Note that the one or more computer programs may constitute a computer-program mechanism. Moreover, instructions in the various modules in memory subsystem 1012 may be implemented in: a high-level procedural language, an object-oriented programming language, and/or in an assembly or machine language. Furthermore, the programming language may be compiled or interpreted, e.g., configurable or configured (which may be used interchangeably in this discussion), to be executed by processing subsystem 1010.

In addition, memory subsystem 1012 can include mechanisms for controlling access to the memory. In some embodiments, memory subsystem 1012 includes a memory hierarchy that comprises one or more caches coupled to a memory in electronic device 1000. In some of these embodiments, one or more of the caches is located in processing subsystem 1010.

In some embodiments, memory subsystem 1012 is coupled to one or more high-capacity mass-storage devices (not shown). For example, memory subsystem 1012 can be coupled to a magnetic or optical drive, a solid-state drive, or another type of mass-storage device. In these embodiments, memory subsystem 1012 can be used by electronic device 1000 as fast-access storage for often-used data, while the mass-storage device is used to store less frequently used data.

Networking subsystem 1014 includes one or more devices configured to couple to and communicate on a wired and/or wireless network (i.e., to perform network operations), including: control logic 1016, an interface circuit 1018 and one or more antennas 1020 (or antenna elements). (While FIG. 10 includes one or more antennas 1020, in some embodiments electronic device 1000 includes one or more nodes, such as nodes 1008, e.g., a network node that can be coupled or connected to a network or link, or an antenna node, connector or a metal pad that can be coupled to the one or more antennas 1020. Thus, electronic device 1000 may or may not include the one or more antennas 1020.) For example, networking subsystem 1014 can include a Bluetooth^{™} networking system, a cellular networking system (e.g., a 3G/4G/5G network such as UMTS, LTE, etc.), a universal serial bus (USB) networking system, a networking system based on the standards described in IEEE 802.11 (e.g., a Wi-Fi^{®} networking system), an Ethernet networking system, a cable modem networking system, and/or another networking system.

Note that a transmit or receive antenna pattern (or antenna radiation pattern) of electronic device 1000 may be adapted or changed using pattern shapers (such as reflectors) in one or more antennas 1020 (or antenna elements), which can be independently and selectively electrically coupled to ground to steer the transmit antenna pattern in different directions. Thus, if one or more antennas 1020 include N antenna pattern shapers, the one or more antennas may have 2^{N} different antenna pattern configurations. More generally, a given antenna pattern may include amplitudes and/or phases of signals that specify a direction of the main or primary lobe of the given antenna pattern, as well as so-called 'exclusion regions' or 'exclusion zones' (which are sometimes referred to as 'notches' or 'nulls'). Note that an exclusion zone of the given antenna pattern includes a low-intensity region of the given antenna pattern. While the intensity is not necessarily zero in the exclusion zone, it may be below a threshold, such as 3dB or lower than the peak gain of the given antenna pattern. Thus, the given antenna pattern may include a local maximum (e.g., a primary beam) that directs gain in the direction of electronic device 1000 that is of interest, and one or more local minima that reduce gain in the direction of other electronic devices that are not of interest. In this way, the given antenna pattern may be selected so that communication that is undesirable (such as with the other electronic devices) is avoided to reduce or eliminate adverse effects, such as interference or crosstalk.

Networking subsystem 1014 includes processors, controllers, radios/antennas, sockets/plugs, and/or other devices used for coupling to, communicating on, and handling data and events for each supported networking system. Note that mechanisms used for coupling to, communicating on, and handling data and events on the network for each network system are sometimes collectively referred to as a 'network interface' for the network system. Moreover, in some embodiments a 'network' or a 'connection' between the electronic devices does not yet exist. Therefore, electronic device 1000 may use the mechanisms in networking subsystem 1014 for performing simple wireless communication between the electronic devices, e.g., transmitting advertising or beacon frames and/or scanning for advertising frames transmitted by other electronic devices as described previously.

Within electronic device 1000, processing subsystem 1010, memory subsystem 1012, and networking subsystem 1014 are coupled together using bus 1028. Bus 1028 may include an electrical, optical, and/or electro-optical connection that the subsystems can use to communicate commands and data among one another. Although only one bus 1028 is shown for clarity, different embodiments can include a different number or configuration of electrical, optical, and/or electro-optical connections among the subsystems.

In some embodiments, electronic device 1000 includes a display subsystem 1026 for displaying information on a display, which may include a display driver and the display, such as a liquid-crystal display, a multi-touch touchscreen, etc.

Electronic device 1000 can be (or can be included in) any electronic device with at least one network interface. For example, electronic device 1000 can be (or can be included in): a desktop computer, a laptop computer, a subnotebook/netbook, a server, a tablet computer, a smartphone, a cellular telephone, a smartwatch, a consumer-electronic device, a portable computing device, an access point, a transceiver, a router, a switch, communication equipment, a computer network device, a stack of multiple computer network devices, a controller, test equipment, an Internet-of-Things (IoT) device, and/or another electronic device.

Although specific components are used to describe electronic device 1000, in alternative embodiments, different components and/or subsystems may be present in electronic device 1000. For example, electronic device 1000 may include one or more additional processing subsystems, memory subsystems, networking subsystems, and/or display subsystems. Additionally, one or more of the subsystems may not be present in electronic device 1000. Moreover, in some embodiments, electronic device 1000 may include one or more additional subsystems that are not shown in FIG. 10. Also, although separate subsystems are shown in FIG. 10, in some embodiments some or all of a given subsystem or component can be integrated into one or more of the other subsystems or component(s) in electronic device 1000. For example, in some embodiments program instructions 1022 are included in operating system 1024 and/or control logic 1016 is included in interface circuit 1018. In some embodiments, the communication techniques are implemented using information in L1, LI.5 and/or L2 of an Open Systems Interconnection (OSI) model.

Moreover, the circuits and components in electronic device 1000 may be implemented using any combination of analog and/or digital circuitry, including: bipolar, PMOS and/or NMOS gates or transistors. Furthermore, signals in these embodiments may include digital signals that have approximately discrete values and/or analog signals that have continuous values. Additionally, components and circuits may be single-ended or differential, and power supplies may be unipolar or bipolar.

An integrated circuit (which is sometimes referred to as a 'communication circuit') may implement some or all of the functionality of electronic device 1000 and/or networking subsystem 1014. The integrated circuit may include hardware and/or software mechanisms that are used for transmitting wireless signals from electronic device 1000 and receiving signals at electronic device 1000 from other electronic devices. Aside from the mechanisms herein described, radios are generally known in the art and hence are not described in detail. In general, networking subsystem 1014 and/or the integrated circuit can include any number of radios. Note that the radios in multiple-radio embodiments function in a similar way to the described single-radio embodiments.

In some embodiments, networking subsystem 1014 and/or the integrated circuit include a configuration mechanism (such as one or more hardware and/or software mechanisms) that configures the radio(s) to transmit and/or receive on a given communication channel (e.g., a given carrier frequency). For example, in some embodiments, the configuration mechanism can be used to switch the radio from monitoring and/or transmitting on a given communication channel to monitoring and/or transmitting on a different communication channel. (Note that 'monitoring' as used herein comprises receiving signals from other electronic devices and possibly performing one or more processing operations on the received signals)

In some embodiments, an output of a process for designing the integrated circuit, or a portion of the integrated circuit, which includes one or more of the circuits described herein may be a computer-readable medium such as, for example, a magnetic tape or an optical or magnetic disk. The computer-readable medium may be encoded with data structures or other information describing circuitry that may be physically instantiated as the integrated circuit or the portion of the integrated circuit. Although various formats may be used for such encoding, these data structures are commonly written in: Caltech Intermediate Format (CIF), Calma GDS II Stream Format (GDSII) or Electronic Design Interchange Format (EDIF). Those of skill in the art of integrated circuit design can develop such data structures from schematics of the type detailed above and the corresponding descriptions and encode the data structures on the computer-readable medium. Those of skill in the art of integrated circuit fabrication can use such encoded data to fabricate integrated circuits that include one or more of the circuits described herein.

While the preceding discussion used Ethernet and a Wi-Fi communication protocol as an illustrative example, in other embodiments a wide variety of communication protocols and, more generally, wired and/or wireless communication techniques may be used. Thus, the communication techniques may be used with a variety of network interfaces. Furthermore, while some of the operations in the preceding embodiments were implemented in hardware or software, in general the operations in the preceding embodiments can be implemented in a wide variety of configurations and architectures. Therefore, some or all of the operations in the preceding embodiments may be performed in hardware, in software or both. For example, at least some of the operations in the communication techniques may be implemented using program instructions 1022, operating system 1024 (such as a driver for interface circuit 1018) or in firmware in interface circuit 1018. Alternatively or additionally, at least some of the operations in the communication techniques may be implemented in a physical layer, such as hardware in interface circuit 1018.

In the preceding description, we refer to 'some embodiments.' Note that 'some embodiments' describes a subset of all of the possible embodiments, but does not always specify the same subset of embodiments. Moreover, note that numerical values in the preceding embodiments are illustrative examples of some embodiments. In other embodiments of the communication techniques, different numerical values may be used.

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed. Accordingly, many modifications and variations will be apparent to practitioners skilled in the art, and the general principles defined herein may be applied to other embodiments and applications without departing from the spirit and scope of the present disclosure. Additionally, the discussion of the preceding embodiments is not intended to limit the present disclosure. Thus, the present disclosure is not intended to be limited to the embodiments shown, but is to be accorded the widest scope consistent with the principles and features disclosed herein.

## Claims

1. A computer network device (106), comprising:
an interface circuit (1014);
a processor (1010); and
memory (1012) configured to store program instructions (1022), wherein, when executed by the processor, the program instructions cause the computer network device to perform operations comprising:
receiving (210) a link aggregation group, LAG, command (310);
accessing (212) a user LAG configuration (316) and information (318) specifying events for ports (312) based at least in part on the LAG command;
receiving (214) packet data units, PDUs, (326) associated with the ports;
determining (216) a dynamic LAG (330) based at least in part on the user LAG configuration, the information and the PDUs; and
implementing (218) a trunk (334) having member ports in a physical layer based at least in part on the dynamic LAG, wherein the member ports in the trunk comprise at least a subset of member ports in the dynamic LAG.

2. The computer network device of claim 1, wherein the determining of the dynamic LAG is not be compatible with Institute of Electrical and Electronics Engineers, IEEE, 802.3ad and the dynamic LAG is not be compatible with IEEE 802.1ax.

3. The computer network device of claim 1 or 2, wherein the events for the ports specify availability of the ports.

4. The computer network device of claim 1, 2 or 3, wherein a given PDU in the PDUs specifies: a destination address, a source address, a type of the given PDU, and a communication protocol.

5. The computer network device of any preceding claim, wherein a given PDU in the PDUs comprises an identifier corresponding to the dynamic LAG.

6. The computer network device of any preceding claim, wherein the PDUs specify second information associated with second ports in another computer network device; and
wherein the ports comprise the second ports.

7. The computer network device of claim 6, wherein the member ports in the dynamic LAG comprise the second ports.

8. The computer network device of claim 6, wherein, when the dynamic LAG is determined, the second information is used in a state machine.

9. The computer network device of claim 6, wherein a given port in the ports is a potential member port in the dynamic LAG when the second information for the given port matches third information for the given port in the user LAG configuration.

10. The computer network device of any preceding claim, wherein the dynamic LAG comprises a software trunk configuration.

11. The computer network device of any preceding claim, wherein the computer network device detects a failure in the dynamic LAG in less than a first predefined time interval and forwards traffic in less than a second predefined time interval.

12. The computer network device of any preceding claim, wherein the dynamic LAG is determined in a distributed manner by at least the computer network device and another computer network device.

13. The computer network device of any preceding claim, wherein, when determining the dynamic LAG, the computer network device does not use a link aggregation control protocol (LACP) aggregation process to determine which of the ports wants to join the dynamic LAG.

14. A non-transitory computer-readable storage medium (1012) for use in conjunction with a computer network device (106), the computer-readable storage medium storing program instructions (1022) that, when executed by the computer network device, causes the computer network device to perform operations comprising:
receiving (210) a link aggregation group, LAG, command (310);
accessing (212) a user LAG configuration (316) and information (318) specifying events for ports (312) based at least in part on the LAG command;
receiving (214) packet data units, PDUs, (326) associated with the ports;
determining (216) a dynamic LAG (330) based at least in part on the user LAG configuration, the information and the PDUs; and
implementing (218) a trunk (334) having member ports in a physical layer based at least in part on the dynamic LAG, wherein the member ports in the trunk comprise at least a subset of member ports in the dynamic LAG.

15. A method (200) for implementing a trunk (334), comprising:
by a computer network device (106):
receiving (210) a link aggregation group, LAG, command (310);
accessing (212) a user LAG configuration (316) and information (318) specifying events for ports (312) based at least in part on the LAG command;
receiving (214) packet data units, PDUs, (326) associated with the ports;
determining (216) a dynamic LAG (330) based at least in part on the user LAG configuration, the information and the PDUs; and
implementing (218) the trunk having member ports in a physical layer based at least in part on the dynamic LAG, wherein the member ports in the trunk comprise at least a subset of member ports in the dynamic LAG.
